# EUROPÄISCHE PATENTSCHRIFT

(11) **EP 0 888 063 B1**
(45) Veröffentlichungstag und Bekanntmachung des Hinweises auf die Patenterteilung: **12.03.2003**
(21) Anmeldenummer: 97906029.0
(22) Anmeldetag: 12.03.1997
(51) Int. Cl.: A21B 1/48, A21B 5/03

(54) **BACKVORRICHTUNG ZUM HERSTELLEN VON ENDLOSEN BÄNDERN**
BAKING DEVICE FOR PRODUCTION OF ENDLESS STRIPS
DISPOSITIF DE CUISSON POUR LA PRODUCTION DE BANDES SANS FIN

(30) Priorität: 18.03.1996 AT 50496
(43) Veröffentlichungstag der Anmeldung: 07.01.1999
(73) Patentinhaber: Franz Haas Waffelmaschinen- Industrie Aktiengesellschaft, 1210 Wien (AT)
(72) Erfinder: HAAS, Franz, sen, A-1210 Wien (AT); HAAS, Johann, A-3400 Klosterneuburg (AT); JIRASCHEK, Stefan, A-1020 Wien (AT)
(74) Vertreter: Puchberger, Rolf
(86) Internationale Anmeldenummer: AT9700052
(87) Internationale Veröffentlichungsnummer: WO97034492

(56) Entgegenhaltungen:
- WO-A-95/32630
- FR-A- 1 026 103
- FR-A- 2 432 141

## Beschreibung

### Gebiet der Erfindung:

Die Erfindung betrifft die Herstellung von endlosen Bändern aus hauptsächlich aus Getreidemehl und Wasser bestehenden Teigen, die auf beheizten, sich bewegenden, endlosen Backflächen durch einen Trocknungs- bzw. Backprozeß in endlose Bänder verwandelt werden. Diese Bänder werden aufgerollt und als endlose Bänder bis zur Weiterverarbeitung zwischengelagert, oder in einzelne Blätter zerteilt und als Blätter bis zur Weiterverarbeitung zwischengelagert, oder gleich nach ihrer Herstellung in einzelne Blätter zerteilt und die einzelnen Blätter in dreidimensionale Gegenstände umgeformt, oder gleich nach ihrer Herstellung in die dreidimensionale Gestalt von Gegenstände umgeformt und anschließend in die einzelnen Gegenstände zerteilt.

### Stand der Technik:

Aus der Nahrungs- und Genußmittelindustrie sind Backvorrichtungen zum Herstellen bzw. Erzeugen von endlosen Bändern bekannt, in denen kontinuierlich ein flüssiger oder pastöser Teig, der hauptsächlich aus Getreidemehl und Wasser besteht, auf eine kontinuierlich umlaufende Backfläche aufgebracht und auf dieser durch einen Trocknungs- bzw. Backprozeß in ein endloses Band verwandelt wird, welches von der umlaufenden Backfläche kontinuierlich abgenommen wird.

Solche Backvorrichtungen sind mit einem, an seiner Innenseite und an seiner Außenseite beheizten, kontinuierlich umlaufenden Backflächenträger ausgestattet, der an seiner Außenseite die umlaufende Backfläche trägt und diese durch eine äußere stationäre Backzone transportiert, an deren Beginn eine Teig-Auftragsvorrichtung und an deren Ende eine Band-Abnahmevorrichtung angeordnet ist. Die Teig-Auftragsvorrichtung bildet auf der umlaufenden Backfläche einen ununterbrochenen Teigstreifen, der in der Backzone zumindest teilweise gebacken wird und am Ende der Backzone als flaches endloses Band durch die Band-Abnahmevorrichtung von der umlaufende Backfläche fortlaufend abgenommen wird. Das so entstandene flache endlose Band wird zumeist in einer an die Backvorrichtung anschließenden Band-Verarbeitungsvorrichtung zu einzelnen Gegenständen mit unterschiedlicher dreidimensionaler Gestalt umgeformt.

Als umlaufender Backflächenträger wird meistens eine rotierende Backtrommel verwendet. Die Nabe der Backtrommel ist auf einer horizontal ausgerichteten Drehachse drehbar gelagert.

Der zylindrische Mantel der Backtrommel ist mit der Nabe durch eine Stützkonstruktion verbunden und trägt an seiner Außenseite die umlaufende Backfläche. Die Backtrommel umschließt einen, die Stützkonstruktion und die Nabe der Backtrommel enthaltenden Innenraum, der auch die Heizvorrichtung zum Beheizen der Innenseite des Trommelmantels enthält. Die Backtrommel umgibt ein Außenraum, der die Teig-Auftragsvorrichtung und die dieser in Drehrichtung der Backtrommel nachgeordnete Band-Abnahmevorrichtung der äußeren stationären Backzone sowie eine Heizvorrichtung zum Beheizen der Außenseite des Trommelmantels enthält.

Derartige Backvorrichtungen werden in der Backwaren-, Waffelbackwaren- bzw. Süßwarenindustrie zur Herstellung von endlosen Waffelbändern verwendet, die im backwarmen Zustand plastisch verformbar sind und innerhalb von kontinuierlich arbeitenden Produktionslinien zu einzelnen, im abgekühlten Zustand knusprig spröden Gegenständen weiterverarbeitet werden. Die endlosen, plastisch verformbaren Waffelbänder werden aus hoch zuckerhaltigen Waffelteigen hergestellt, die 25 bis 100 Gew. -% Zucker, bezogen auf den Mehlanteil des Waffelteiges, enthalten. Die aus zuckerhaltigem Waffelteig bestehenden Gegenstände können bereits ein endgültiges Waffelprodukt darstellen oder ein Zwischenprodukt in der Herstellung von anderen Süßwaren sein, wie z. B. gefüllte Waffeln, mit Creme gefüllte und mit Schokolade überzogene Waffeln, gefülltes Konfekt etc. Aus plastisch verformbaren, endlosen Waffelbändern hergestellte Gegenstände sind z. B. ganze Hohlkörper, wie tiefe Becher, Waffelröllchen, Hohlhippen, Waffeltüten, Eistüten, oder auch Teile von Hohlkörpern, die über blattförmige Stege zusammenhängen und zusammen mit den blattförmigen Stegen jeweils einzelne, mit den Hohlkörperteilen entsprechenden Ausbuchtungen versehene rechteckige Waffelblätter bilden, oder auch flache Becher, Teller, flache Scheiben etc.

Bei den zylindrischen Backtrommeln der bekannten Backvorrichtungen entstehen Wärmeverluste durch das Aufheizen der Trommelnabe und der diese mit dem Trommelmantel formschlüssig verbindenden Stützkonstruktion. Diese kann, je nach der Bauweise der jeweiligen Backtrommel, zwei an den seitlichen Rändern des Trommelmantels angeordnete, radiale Tragscheiben umfassen, oder auch nur eine einzelne radiale Tragscheibe, die in der Mitte des Trommelmantels oder an einem seiner seitlichen Ränder angeordnet ist.

Das Aufheizen der Stützkonstruktion der Backtrommel verhindert zwar die Zerstörung der Stützkonstruktion und damit der Backtrommel durch Wärmespannungen, erzeugt aber einen unregelmäßigen Wärmefluß im Trommelmantel, weil dieser an seiner äußeren Backfläche während des Backprozesses durch das Backgut abgekühlt wird, während die an der Innenseite des Trommelmantels anschließende Stützkonstruktion ihre Temperatur im wesentlichen unverändert beibehält. Dies führt zu einer Bombierung der Backfläche und zu Dickenunterschieden im gebackenen endlosen Band von bis zu 20 %, die sich auch auf die aus dem jeweiligen endlosen Band hergestellten Produkte nachteilig auswirken. Das Aufheizen der Stützkonstruktion erfordert zusätzliche, für den Backprozeß nicht nutzbare Heizenergie.

Bei der Herstellung von endlosen, in backwarmen Zustand plastisch verformbaren Waffelbändern liegen die Betriebstemperaturen der Backtrommel bzw. Backtemperaturen des Teigbandes bei 200 °C bis 250 °C.

Mit zunehmender Größe der Backtrommel nimmt nicht nur die während des Backprozesses als Wärmespeicher wirkende Masse des Trommelmantels zu, sondern auch die Massen von Trommelnabe und Stützkonstruktion und damit die durch das Aufheizen dieser Massen verursachten Wärmeverluste der Backvorrichtung.

Aus der WO 95/32630 ist eine Backvorrichtung zur Herstellung eines im warmen Zustand plastisch verformbaren, endlosen Waffelbandes mit einer nachgeordneten Band-Verarbeitungsvorrichtung bekannt. Das endlose Band wird auf dem umlaufenden Backflächenträger der Backvorrichtung hergestellt, der als rotierende Backtrommel oder als ein um zwei im Abstand von einander angeordnete Umlenktrommeln umlaufendes, endloses Backband ausgebildet ist. Das im warmen Zustand plastisch verformbare Waffelband wird in einer Band-Verarbeitungsvorrichtung in einzelne fächerförmige Waffelstücke zerteilt, die in einer nachgeordneten Rollvorrichtung zu Waffeltüten eingerollt werden.

Aus der AT-PS 380 151 ist eine weitere Backvorrichtung zur Herstellung eines im warmen Zustand plastisch verformbaren, dünnen endlosen Waffelbandes mit einer nachgeordneten Band--Verarbeitungsvorrichtung bekannt. In der Backvorrichtung wird ein dünnes Waffelband auf der Außenseite einer rotierenden, einspurigen Backtrommel gebacken. In der nachgeordneten Band-Verarbeitungsvorrichtung wird das dünne Waffelband in seiner Längsrichtung oder quer dazu zu einem endlosen, zweioder mehrlagigen, laminierten Gebäckband zusammengefaltet, das im plastisch verformbaren Zustand in einer weiteren nachgeordneten Band-Verarbeitungsvorrichtung weiterverarbeitet wird.

Aus der EP-A1 0 211 356 ist eine weitere Backvorrichtung zur Herstellung eines im warmen Zustand plastisch verformbaren, endlosen Waffelbandes mit einer nachgeordneten Band-Verarbeitungsvorrichtung bekannt. In der Backvorrichtung wird auf der Außenseite einer rotierenden Backtrommel ein endloses Waffelband gebacken, das in der nachgeordneten Band-Verarbeitungsvorrichtung in einzelne Waffelblätter zerteilt wird, die im plastisch verformbaren Zustand in einer weiteren nachgeordneten Verarbeitungsvorrichtung einzeln weiterverarbeitet werden.

Aus der US-PS 3 829 593 ist eine Vorrichtung zur Herstellung eines endlosen biegsamen Bandes bekannt, das gleich nach der Herstellung auf einer Vorratsrolle aufgerollt wird. Das biegsame Band wird auf der Außenseite einer rotierenden Backtrommel in einer einzigen äußeren Backzone hergestellt und besteht aus einem auf der äußeren Backfläche der Backtrommel nicht vollständig ausgebackenen Teig. Das im warmen Zustand gleich nach der Herstellung und im abgekühlten Zustand biegsame Band ist für die Herstellung der Teighüllen von chinesischen Frühlingsrollen vorgesehen, die mit einer vorgegarten Füllmasse gefüllt sind und in Öl schwimmend gebacken werden bis die Teighülle braun ist.

Aus der DE-OS 24 35 110 ist eine Anlage zur Herstellung von vorgefertigten und später in Öl schwimmend zu backenden Frühlingsrollen bekannt. Bei dieser Anlage wird auf der Außenseite einer rotierenden Trommel ein endloses Band aus nur teilweise gebackenem Teig hergestellt und dieses endlose Band einer im Abstand nachgeordneten Verarbeitungsvorrichtung zugeführt, in der das endlose Band in einzelne viereckige Teigstücke zerteilt und jedes Teigstücke zu einer vorgefertigten Frühlingsrolle weiterverarbeitet wird. In der Verarbeitungsvorrichtung wird eine vorgegarte Füllmasse auf ein Teigstück aufgebracht und das Teigstücke um die Füllmasse herum zu einer, diese umschließenden Teighülle zusammengelegt und eingerollt.

### Zusammenfassung der Erfindung:

Aufgabe der Erfindung ist es, die Nachteile der bekannten, umlaufenden Backflächenträger zu beseitigen.

Zur Lösung dieser Aufgabe schlägt die Erfindung eine Backvorrichtung zum Herstellen von endlosen Bändern auf einer eine stationäre Backzone mit Teig- Auftragsvorrichtung und nachgeordneter Band-Abnahmevorrichtung durchlaufenden Backfläche eines, um eine stationäre Drehachse kontinuierlich umlaufenden Backflächenträgers vor, der einen eine Heizvorrichtung enthaltenden Innenraum von einem eine Heizvorrichtung enthaltenden Außenraum trennt. Diese Backvorrichtung ist erfindungsgemäß dadurch gekennzeichnet, daß der Backflächenträger als eine in zumindest zwei, im Abstand von der Drehachse angeordneten Lagern um die Drehachse drehbar gelagerte, nabenlose Backtrommel ausgebildet ist, deren Trommelmantel zumindest eine, an seiner Außenseite angeordnete und eine im Außenraum angeordnete, stationäre Backzone durchlaufende Backfläche besitzt.

Bei dieser Ausbildung des umlaufenden Backflächenträgers entfällt gegenüber den bekannten Backtrommeln die Nabe und die diese mit dem Trommelmantel verbindende Stützkonstruktion. Dadurch entfallen auch die sonst durch das Aufheizen von Nabe und Stützkonstruktion verursachten Wärmeverluste. Darüberhinaus entfällt die sonst durch den Anschluß der Stützkonstruktion an den Trommelmantel verursachte, temperaturabhängige, elastische Verformung des Trommelmantels bzw. der von diesem getragenen, umlaufenden Backfläche. Mit der erfindungsgemäßen Backvorrichtung wird nicht nur weniger Energie für die Herstellung der endlosen Bänder benötigt, als bei den bekannten Backtrommeln, sondern es werden auch Bänder mit gleichmäßiger Dicke erhalten.

Gemäß einem weiteren Merkmal der Erfindung kann der Trommelmantel der nabenlosen Backtrommel zumindest eine, an seiner Innenseite angeordnete und eine im Innenraum angeordnete, stationäre Backzone durchlaufende Backfläche besitzen. Diese Ausbildung erlaubt einer Vermehrung der Backflächen und Backzonen, durch an der Innenseite der nabenlosen Backtrommel angeordnete Backflächen und im Innenraum der der nabenlosen Backtrommel angeordnete, stationäre Backzonen. Dies ergibt eine deutliche Vermehrung der Produktionskapazität der erfindungsgemäßen Backvorrichtung ohne Erhöhung des Bauvolumens der Backvorrichtung.

Gemäß einem weiteren Merkmal der Erfindung kann an der Außenseite der nabenlosen Backtrommel zumindest ein Teil des einer inneren Backzone gegenüberliegenden Bereiches frei von äußeren Backzonen und an der Innenseite der nabenlosen Backtrommel zumindest ein Teil des einer äußeren Backzone gegenüberliegenden Bereiches frei von inneren Backzonen sein.

Gemäß einem weiteren Merkmal der Erfindung kann ein die nabenlose Backtrommel und die ihr zugeordneten Heizvorrichtungen zusammen mit der jeweiligen Backzone umschließendes Gehäuse vorgesehen sein, das im Innenraum der nabenlosen Backtrommel zumindest eine seitlich nach außen offene Kammer umgibt, wobei die die Innenseite der nabenlosen Backtrommel beheizende Heizvorrichtung im Gehäuse rund um die seitlich nach außen offene Kammer angeordnet ist. Diese Ausbildung ermöglicht eine weitere Verringerung der Wärmeverluste durch die seitlich nach außen offene Kammer, die den beheizten Innenraum des Gehäuses deutlich verringert.

Gemäß einem weiteren Merkmal der Erfindung kann die Teig-Auftragsvorrichtung und die Band-Abnahmevorrichtung der jeweiligen inneren Backzone in der seitlich nach außen offenen Kammer angeordnet sein.

In weiterer Ausgestaltung der Erfindung wird eine Anlage zum kontinuierlichen Herstellen von einzelnen Gegenständen aus endlosen Bändern vorgeschlagen, bei deren mit einer nabenlosen Backtrommel ausgerüsteten Backvorrichtung zumindest eine der jeweiligen Backzone nachgeordneten Band-Verarbeitungsvorrichtung für das in der betreffenden Backzone entstandene Band vorgesehen ist.

Gemäß einem weiteren Merkmal der Erfindung kann zumindest ein Teil der einer inneren Backzone nachgeordneten Band-Verarbeitungsvorrichtung in der seitlich nach außen offenen Kammer des Gehäuses angeordnet sein.

Nachstehend wird die Erfindung anhand von in den Zeichnungen dargestellten Ausführungsbeispielen im Zusammenhang mit der Herstellung von endlosen Waffelbändern und deren Verarbeitung zu Waffelröllchen oder Hohlhippen näher erläutert.

### Kurze Beschreibung der Zeichnungen:

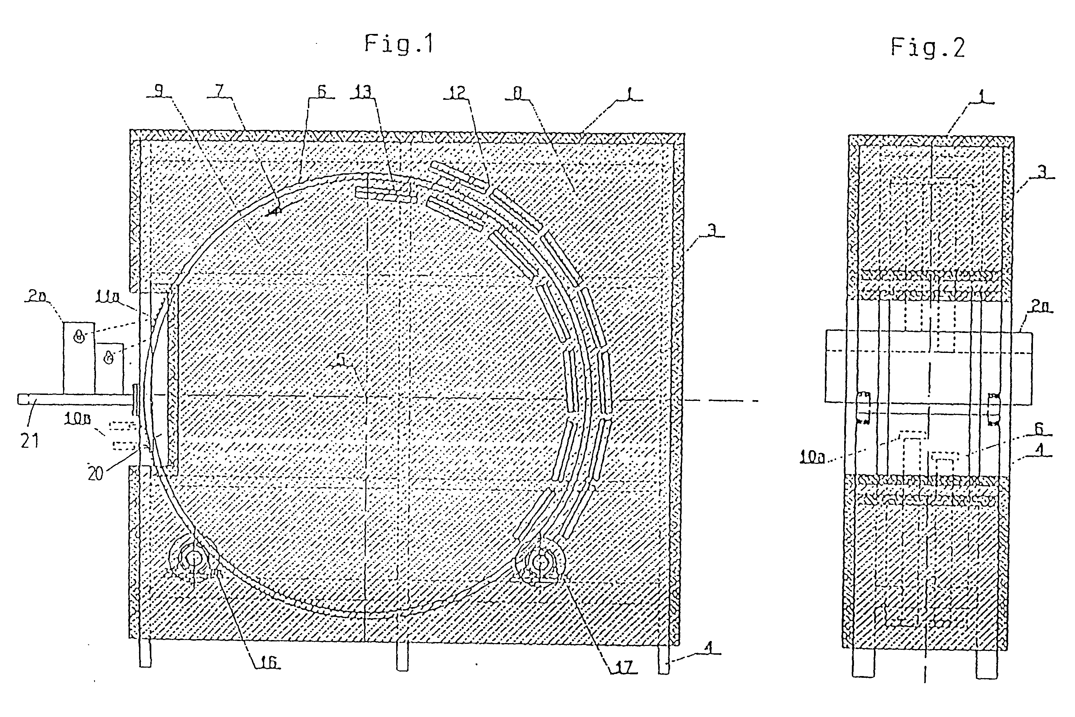

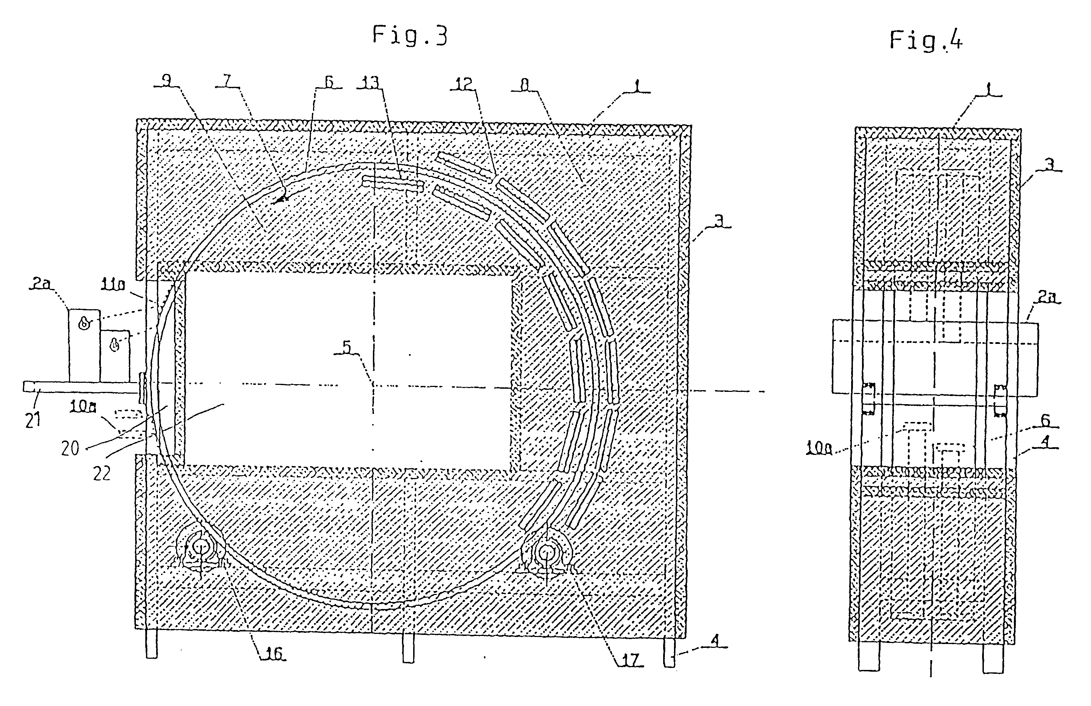

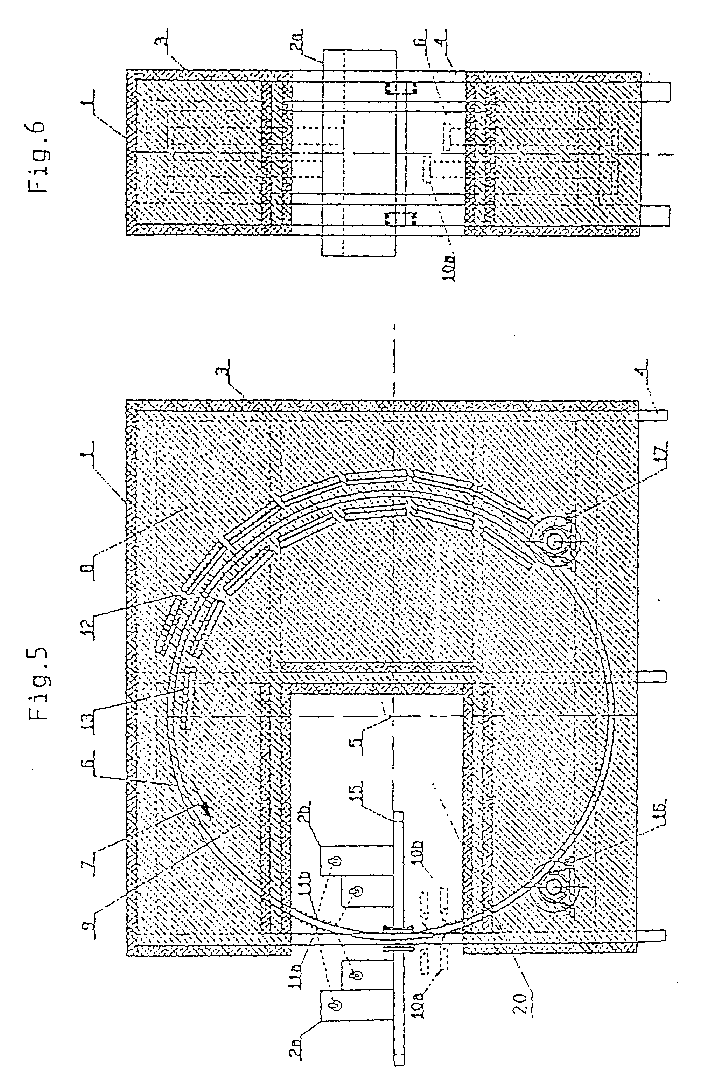

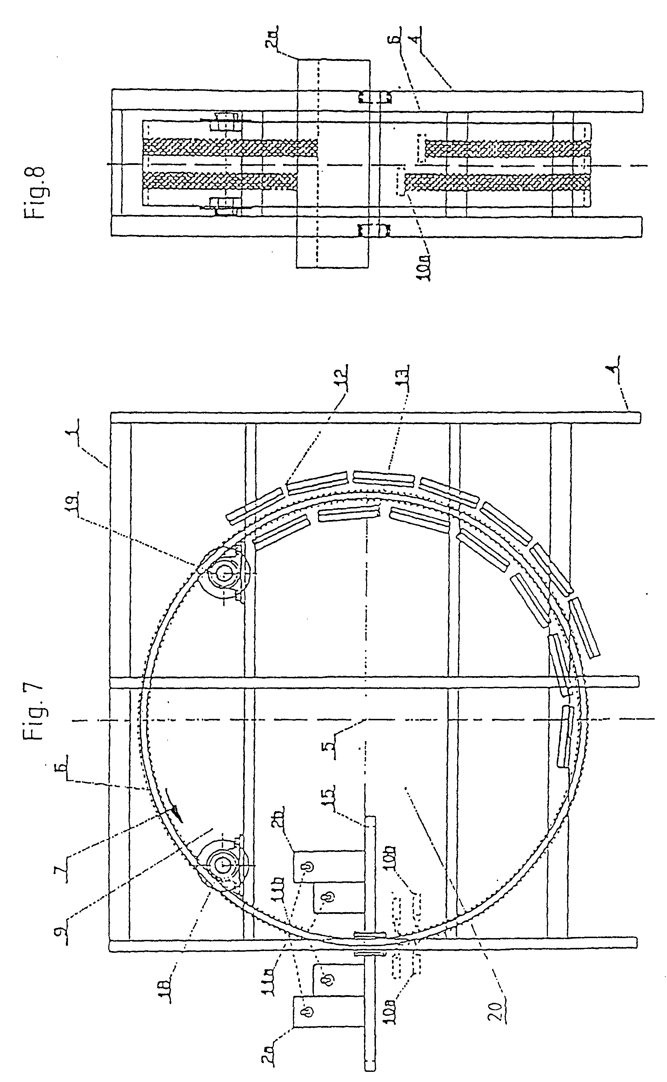

In den Zeichnungen zeigen: Fig. 1 eine Seitenansicht einer Ausführungsform einer Anlage zum Herstellen und Verarbeiten von endlosen Bändern, Fig. 2 die Anlage der Fig. 1 von vorne, Fig. 3 eine Seitenansicht einer weiteren Ausführungsform einer Anlage zum Herstellen und Verarbeiten von endlosen Bändern, Fig. 4 die Anlage der Fig. 3 von vorne, Fig. 5 eine weitere Ausführungsform einer Anlage zum Herstellen und Verarbeiten von endlosen Bändern von der Seite, Fig. 6 die Anlage der Fig. 5 von vorne, Fig. 7 schematisch einen Schnitt durch eine weitere Ausführungsform einer Anlage zum Herstellen und Verarbeiten von endlosen Bändern und Fig. 8 die Anlage der Fig. 7 von vorne.

### Beschreibung von Ausführungsbeispielen:

Die Fig. 1 und 2 zeigen eine Anlage zum kontinuierlichen Herstellen von Waffelröllchen bzw. Hohlhippen. In dem von einem wärmeisolierenden Gehäuse 3 umgebenen Gestell 4 der Backvorrichtung 1 ist eine, um eine stationäre Mittelachse 5 umlaufende, nabenlose Backtrommel 6 in zwei im Abstand von der Mittelachse 5 angeordneten Lagern um diese Mittelachse 5 drehbar gelagert. Die stationäre Mittelachse 5 bildet eine imaginäre Drehachse, um die die nabenlose Backtrommel 6 kontinuierlich in Richtung des Pfeiles 7 umläuft. Die nabenlose Backtrommel 6 trennt innerhalb der Backvorrichtung 1 bzw. innerhalb des Gehäuses 3 einen Außenraum 8, dem die Außenseite der nabenlosen Backtrommel 6 zugewandt ist, von einen Innenraum 9, dem die Innenseite der nabenlosen Backtrommel 6 zugewandt ist. In der Backvorrichtung 1 werden auf der Außenseite der nabenlosen Backtrommel 6 in zwei nebeneinander angeordneten äußeren Backzonen zwei endlose Waffelbänder gleichzeitig hergestellt, die von zwei der Außenseite der nabenlosen Backtrommel 6 benachbarten Band-Verarbeitungsvorrichtungen 2a jeweils schraubenförmig überlappend zu einer endlosen rohrförmigen Waffel eingerollt werden, welche fortlaufend in die einzelnen Waffelröllchen bzw. Hohlhippen zerteilt wird. Im Außenraum 8 ist entlang der nabenlosen Backtrommel 6 eine, aus mehreren Heizkörpern bestehende Heizvorrichtung 12 zum Beheizen der Außenseite der nabenlosen Backtrommel 6 angeordnet. Im Innenraum 9 ist entlang der nabenlosen Backtrommel 6 eine, ebenfalls aus mehreren Heizkörpern bestehende Heizvorrichtung 13 zum Beheizen der Innenseite der nabenlosen Backtrommel 6 angeordnet. Die nabenlose Backtrommel 6 ist in dem von einem wärmeisolierenden Gehäuse 3 umgebenen Gestell 4 in zwei unterhalb der Mittelachse 5 im Abstand von einander angeordneten Lagern 16, 17 drehbar gelagert und wird über zumindest eine, in einem der Lager 16,17 angeordnete Antriebswelle in Umlauf um die Mittelachse 5 versetzt. Die nabenlose Backtrommel 6 wird an ihrer Innenseite von den in ihrem Innenraum 9 entlang ihres Umfanges angeordneten Heizkörpern 13 und an ihrer Außenseite von den, in dem sie umgebenden Außenraum 8 des Gehäuses 3 entlang ihrem Umfang angeordneten Heizkörpern 12 beheizt. An der Stirnseite der Backvorrichtung 1 erstreckt sich die nabenlose Backtrommel 6 durch eine außerhalb des wärmeisolierenden Gehäuses 3 gelegene Kammer 20, die zur Stirnseite der Backvorrichtung 1 hin und seitlich nach außen offen ist. In dieser Kammer 20 sind die Teig-Auftragsvorrichtungen 10a und die Band-Abnahmevorrichtungen 11a der beiden äußeren Backzonen angeordnet. Die Kammer 20 erstreckt sich von der Stirnseite der Backvorrichtung 1 in den Innenraum 9 hinein und besitzt der Stirnseite der Backvorrichtung 1 benachbart eine obere und eine untere Durchtrittsöffnung für die nabenlose Backtrommel 6 und die auf dieser gebackenen Teigbänder. Die den beiden äußeren Backzonen zugeordneten Band-Verarbeitungsvorrichtungen 2a sind auf einer an der Stirnseite der Backvorrichtung 1 befestigten Tragplatte 21 angeordnet.

In Fig. 3 und 4 ist eine weitere Ausführungsform einer Anlage zum kontinuierlichen Herstellen und Verarbeiten von zwei endlosen Waffelbändern dargestellt, bei welcher an die außerhalb des wärmeisolierenden Gehäuses 3 gelegene Kammer 20 eine weitere seitlich nach außen offene Kammer 22 anschließt, die sich in den von der nabenlosen Backtrommel umgebenen Innenraum 9 hinein erstreckt. Diese weitere seitlich nach außen offene Kammer 22 wird von dem im wesentlichen C-förmigen wärmeisolierenden Gehäuse 3 der Backvorrichtung 1 umgeben und verringert dadurch das während des Backprozesses aufzuheizende Innenvolumen der Backvorrichtung 1.

Die Fig. 5 und 6 zeigen eine Anlage zum kontinuierlichen Herstellen von Waffelröllchen bzw. Hohlhippen mit einer Backvorrichtung 1, bei der ausgehend von der Ausführungsform nach den Fig. 3 und 4 auch die Innenseite des zylindrischen Trommelmantels als Backfläche genutzt wird, sodaß gleichzeitig z. B. vier endlose Waffelbänder hergestellt werden, und mit vier Band-Verarbeitungsvorrichtungen 2a,2b, in denen jeweils ein endloses Waffelband schraubenförmig überlappend zu einer endlosen rohrförmigen Waffel eingerollt und in einzelne Waffelröllchen bzw. Hohlhippen zerteilt wird.

Die nabenlose Backtrommel 6 besteht nur aus dem zylindrischen Trommelmantel, der an seiner Außenseite und an seiner Innenseite jeweils zwei nebeneinander angeordnete, endlose Backflächen trägt, denen jeweils eine äußere bzw. innere stationäre Backzone zugeordneten ist. Jede äußere Backzone umfaßt eine, an ihrem Anfang angeordnete und am Gestell 4 befestigte, äußere Teig-Auftragsvorrichtung 10a und eine dieser in Umlaufrichtung 7 des Trommelmantels nachgeordnete und am Ende der äußeren Backzone angeordnete, am Gestell 4 befestigte, äußere Band-Abnahmevorrichtung 11a. Jede innere Backzone umfaßt eine, an ihrem Anfang angeordnete und im Innenraum 9 am Gestell 4 befestigte, innere Teig-Auftragsvorrichtung 10b, der in Umlaufrichtung 7 des Trommelmantels eine innere Band--Abnahmevorrichtung 11b nachgeordnet ist, die am Ende der inneren Backzone im Innenraum 9 am Gestell 4 befestigt ist. Die äußeren bzw. inneren Band-Abnahmevorrichtungen 11a bzw. 11b sind in den Zeichnungen nur symbolisch dargestellt.

Die im Gestell 4 in Richtung des Pfeiles 7 umlaufende nabenlose Backtrommel 6 ist auf im Außenraum 8 unterhalb der Mittelachse 5 angeordneten Lagern 16 und 17 um die Mittelachse 5 drehbar gelagert. Die Lager 16 und 17 sind symmetrisch zu der durch die Mittelachse 5 verlaufenden Vertikalebene angeordnet. Die mit den Seitenrändern ihres Trommelmantels auf den Lagern 16 und 17 aufliegende nabenlose Backtrommel 6 wird über mindestens eine Antriebswelle in Umlauf um die Mittelachse 5 versetzt, welche mit einem der Lager 16 bzw. 17 verbunden ist.

Das im wesentlichen C-förmige Gehäuse 3 umschließt die nabenlose Backtrommel 6 mit ihren äußeren und inneren, umlaufenden Backflächen und die diesen Backflächen jeweils zugeordneten äußeren bzw. inneren stationären Backzonen und die diesen jeweils zugeordneten Heizvorrichtungen 12,13 im Außenraum 8 bzw. Innenraum 9. Das Gehäuse 3 umschließt ferner im Innenraum 9 eine zur Stirnseite der Backvorrichtung 1 hin und seitlich nach außen offenen Kammer 20, in der die äußeren bzw. inneren Teig-Auftragsvorrichtungen 10a bzw. 10b und die äußeren bzw. inneren Band-Abnahmevorrichtungen 11a bzw. 11b angeordnet sind. Die Kammer 20 erstreckt sich von der Stirnseite der Backvorrichtung 1 in den Innenraum 9 hinein und besitzt der Stirnseite der Backvorrichtung 1 benachbart eine obere und eine untere Durchtrittsöffnung für die nabenlose Backtrommel 6 und die auf dieser gebackenen Teigbänder. Die die Innenseite der nabenlosen Backtrommel 6 beheizende Heizvorrichtung 13 ist im Innenraum 9 des Gehäuses 3 entlang der nabenlosen Backtrommel 6 und um die seitlich nach außen offene Kammer 20 herum angeordnet.

Die vier, jeweils einer stationären Backzone zugeordneten Band-Verarbeitungsvorrichtungen 2a,2b sind auf einem horizontalen Traggestell 15 befestigt, das an der Stirnseite der Backvorrichtung 1 angeordnet ist und sich in die Kammer 20 hineinerstreckt. Die den beiden äußeren Backzonen zugeordneten, äußeren Band-Verarbeitungsvorrichtungen 2a sind am horizontalen Traggestell 15 außerhalb der nabenlose Backtrommel 6 der Stirnseite der Backvorrichtung 1 benachbart angeordnet. Die den beiden inneren Backzonen zugeordneten, inneren Band--Verarbeitungsvorrichtungen 2b sind innerhalb der Kammer 20 am horizontalen Traggestell 15 und innerhalb der nabenlose Backtrommel 6 der Stirnseite der Backvorrichtung 1 benachbart angeordnet. Bei jeder stationären Backzone kann die Band-Abnahmevorrichtung 11a bzw. 11b in die jeweilige Band-Verarbeitungsvorrichtung 2a bzw 2b integriert sein bzw. von dieser gebildet werden, sodaß die jeweilige Band-Verarbeitungsvorrichtung 2a bzw. 2b selbst die Band-Abnahmevorrichtung darstellt und keine eigene Band-Abnahmevorrichtung notwendig ist.

In Fig. 7 und 8 ist schematisch eine weitere Ausführungsform einer Anlage zum kontinuierlichen Herstellen und Verarbeiten von vier endlosen Waffelbändern dargestellt, wobei der übersichtlicheren Darstellung wegen das äußere wärmeisolierende Gehäuse nicht dargestellt ist. Diese Anlage unterscheidet sich von jener der Fig. 5 und 6 durch die Aufhängung des die nabenlose Backtrommel 6 bildenden Backzylinders. Der im Gestell 4 in Richtung des Pfeiles 7 um die Mittelachse 5 umlaufende Backzylinder 6 liegt an seiner Innenseite mit seinen Seitenrändern auf zwei im Innenraum 9 oberhalb der Mittelachse 5 angeordneten Lagern 18 und 19 auf. Die Lager 18,19 sind symmetrisch zu der durch die Mittelachse 5 verlaufenden Vertikalebene angeordnet. Zumindest eines der Lager 18,19 ist mit einer Antriebswelle verbunden, die mit dem Backzylinder 6 im Eingriff steht und diesen um die Mittelachse 5 in Umlauf versetzt.

Selbstverständlich ist die vorliegende Erfindung nicht auf die dargestellten und im Zusammenhang mit der Herstellung von endlosen Waffelbändern und deren Verarbeitung zu Waffelröllchen oder Hohlhippen näher erläutern Ausführungsbeispiele beschränkt.

Die nabenlose Backtrommel 6 der Backvorrichtung 1 kann auch nur eine einzige umlaufende Backfläche an ihrer Außenseite besitzen, welcher entlang dem zylindrischen Trommelmantel nur eine einzige äußere stationäre Backzone zugeordnet ist, in der ein einziges endloses Band hergestellt wird. Bei einer Backtrommel 6 mit größerem Durchmesser können der an der Außenseite des Trommelmantels angeordneten, umlaufenden Backfläche entlang dem Trommelmantel auch zwei stationäre, in Umlaufrichtung der Backtrommel 6 hintereinander angeordnete, äußere Backzonen zugeordnet sein, in denen jeweils ein einziges endloses Band hergestellt wird. Desweiteren kann auch an der Innenseite des Trommelmantels eine einzige umlaufende Backfläche vorgesehen sein, der entlang dem Trommelmantel nur eine einzige oder zwei oder mehrere in Umlaufrichtung der Backtrommel 6 hintereinander angeordnete, innere Backzonen zugeordnet sind. Sowohl an der Außenseite als auch an der Innenseite des Trommelmantels der nabenlosen Backtrommel 6 können zwei oder mehrere umlaufende Backflächen jeweils nebeneinander angeordnet sein, wobei jeder einzelnen umlaufenden Backfläche nur eine einzige oder auch zwei oder mehrere in Umlaufrichtung der Backtrommel 6 hintereinander angeordnete, innere bzw. äußere Backzonen zugeordnet sein können, in denen jeweils ein einziges endloses Band hergestellt wird.

Darüberhinaus können bei den erfindungsgemäßen Anlagen die

Band-Verarbeitungsvorrichtungen zum schraubenförmig überlappenden Einrollen der endlosen Waffelbänder zu einer endlosen rohrförmigen Waffel durch andere Band-Verarbeitungsvorrichtungen zur Herstellung anderer Gegenstände ersetzt werden. Ebenso können andere Teige als flüssige Waffelteige in den Backvorrichtungen zum Herstellen von endlosen, mehr oder weniger durchgebackenen Bändern eingesetzt werden.

## Patentansprüche

1. Backvorrichtung (1) zum Herstellen von endlosen Bändern auf einer eine stationäre Backzone mit Teig-Auftragsvorrichtung (10a) und nachgeordneter Band-Abnahmevorrichtung (11a) durchlaufenden Backfläche eines, um eine stationäre Drehachse (5) kontinuierlich umlaufenden Backflächenträgers (6), der einen eine Heizvorrichtung (13) enthaltenden Innenraum (9) von einem eine Heizvorrichtung (12) enthaltenden Außenraum (8) trennt, **dadurch gekennzeichnet, daß** der Backflächenträger als eine in zumindest zwei, im Abstand von der Drehachse (5) angeordneten Lagern (16, 17, 18, 19) um die Drehachse (5) drehbar gelagerte, nabenlose Backtrommel (6) ausgebildet ist, deren Trommelmantel zumindest eine, an seiner Außenseite angeordnete und eine im Außenraum (8) angeordnete, stationäre Backzone durchlaufende Backfläche besitzt.

2. Vorrichtung nach Anspruch 1, **dadurch gekennzeichnet, daß** der Trommelmantel der nabenlosen Backtrommel (6) zumindest eine, an seiner Innenseite angeordnete und eine im Innenraum (9) angeordnete, stationäre Backzone durchlaufende Backfläche besitzt.

3. Vorrichtung nach Anspruch 2, **dadurch gekennzeichnet, daß** an der Außenseite der nabenlosen Backtrommel (6) zumindest ein Teil des einer inneren Backzone gegenüberliegenden Bereiches frei von äußeren Backzonen ist und daß an der Innenseite der nabenlosen Backtrommel (6) zumindest ein Teil des einer äußeren Backzone gegenüberliegenden Bereiches frei von inneren Backzonen ist.

4. Vorrichtung nach einem der Ansprüche 1 bis 3, **dadurch gekennzeichnet, daß** ein die nabenlose Backtrommel (6) und die ihr zugeordneten Heizvorrichtungen (12, 13) zusammen mit der jeweiligen Backzone umschließendes Gehäuse (3) vorgesehen ist, das im Innenraum der nabenlosen Backtrommel (6) zumindest eine seitlich nach außen offene Kammer (20) umgibt, wobei die die Innenseite der nabenlosen Backtrommel beheizende Heizvorrichtung im Gehäuse rund um die seitlich nach außen offene Kammer angeordnet ist.

5. Vorrichtung nach Anspruch 4, **dadurch gekennzeichnet, daß** die Teig-Auftragsvorrichtung (10b) und die Band-Abnahmevorrichtung (11b) der jeweiligen inneren Backzone in der seitlich nach außen offenen Kammer (20) angeordnet sind.

6. Anlage zum kontinuierlichen Herstellen von einzelnen Gegenständen aus endlosen Bändern mit einer Backvorrichtung nach einem der Ansprüche 1 bis 5, **gekennzeichnet durch** zumindest eine der jeweiligen Backzone nachgeordnete Band-Verarbeitungsvorrichtung (2a, 2b) für das in der betreffenden Backzone entstandene Band.

7. Vorrichtung nach Anspruch 6, **dadurch gekennzeichnet, daß** zumindest ein Teil der einer inneren Backzone nachgeordneten Band-Verarbeitungsvorrichtung (2b) in der seitlich nach außen offenen Kammer (20) des Gehäuses (3) angeordnet ist.

## Claims

1. Baking apparatus (1) for producing continuous strips on a baking surface of a baking surface carrier (6), which baking surface passes through a stationary baking zone having a dough application apparatus (10a) and a downstream strip removal apparatus (11a), the baking surface carrier (6) running continuously around a stationary axis of rotation (5) and separating an inner space (9) which contains a heating apparatus (13) from an outer space (8) which contains a heating apparatus (12), **characterised in that** the baking surface carrier is in the form of a hubless baking drum (6) which is supported for rotation about the axis of rotation (5) in at least two bearings (16, 17, 18, 19), which are arranged spaced from the axis of rotation (5), and whose drum casing has at least one baking surface which is arranged at the outer face thereof and one baking surface which is arranged in the outer space (8) and which passes through the stationary baking zone.

2. Apparatus according to claim 1, **characterised in that** the drum casing of the hubless baking drum (6) has at least one baking surface which is arranged at the inner face thereof and a baking surface which is arranged in the inner space (9) and which passes through the stationary baking zone.

3. Apparatus according to claim 2, **characterised in that**, at the outer face of the hubless baking drum (6), at least a portion of the region opposite an inner baking zone is free from outer baking zones, and **in that**, at the inner face of the hubless baking drum (6), at least a portion of the region opposite an outer baking zone is free from inner baking zones.

4. Apparatus according to any one of claims 1 to 3, **characterised in that** there is provided a housing (3) which surrounds the hubless baking drum (6) and the heating devices (12, 13) associated therewith, together with the respective baking zone, and which surrounds at least one chamber (20), which is open laterally outwardly, in the inner space of the hubless baking drum (6), the heating device which heats the inner face of the hubless baking drum being arranged in the housing around the chamber which is open laterally outwardly.

5. Apparatus according to claim 4, **characterised in that** the dough application apparatus (10b) and the strip removal apparatus (11b) of the respective inner baking zone are arranged in the laterally outwardly open chamber (20).

6. Arrangement for the continuous production of individual objects from continuous strips having a baking apparatus according to any one of claims 1 to 5, **characterised by** at least one strip processing apparatus (2a, 2b) downstream of the respective baking zone for the strip produced in the relevant baking zone.

7. Apparatus according to claim 6, **characterised in that** at least a portion of the strip processing apparatus (2b) which is downstream of an inner baking zone is arranged in the laterally outwardly open chamber (20) of the housing (3).

## Revendications

1. Dispositif (1) de cuisson pour la production de bandes sans fin sur une surface de cuisson passant dans une zone fixe de cuisson, ayant un dispositif (10a) de dépôt de pâte, et dans un dispositif (11a) en aval de transfert de bandes d'un support (6) de surface de cuisson qui tourne en continu par rapport à un axe (5) fixe de rotation et qui sépare une chambre (9) intérieure contenant un dispositif (13) de chauffage d'une chambre (8) extérieure contenant un dispositif (12) de chauffage, **caractérisé en ce que** le support de surface de cuisson est constitué sous la forme d'un tambour (6) de cuisson sans moyeu monté tournant par rapport à l'axe (5) de rotation dans au moins deux paliers (16, 17, 18, 19) disposés à distance de l'axe (5) de rotation, la surface latérale du tambour ayant au moins une surface de cuisson disposée sur sa face extérieure et une surface de cuisson passant dans la zone fixe de cuisson disposée dans la chambre (8) extérieure.

2. Dispositif suivant la revendication 1, **caractérisé en ce que** la surface latérale du tambour (6) de cuisson sans moyeu a au moins une surface de cuisson disposée sur sa face intérieure et une surface de cuisson disposée dans la chambre (9) intérieure et passant dans la zone (6) de cuisson.

3. Dispositif suivant la revendication 2, **caractérisé en ce que** sur la face extérieure du tambour (6) de cuisson sans moyeu au moins une partie de la légion opposée à une zone intérieure de cuisson est exempte de zone extérieure de cuisson et, **en ce que** sur la face intérieure du tambour (6) de cuisson sans moyeu, au moins une partie d'une région opposée à une zone extérieurs de cuisson est exempte de zone intérieure de cuisson.

4. Dispositif suivant l'une des revendications 1 à 3, **caractérisé en ce qu'**il est prévu une enveloppe (3) entourant le tambour (6) de cuisson sans moyeu et les dispositifs (12, 13) de chauffage qui y sont associés ensembles avec la zone de cuisson respective, **en ce que** dans la chambre intérieure le tambour (6) de cuisson sans moyeu entoure au moins une chambre (20) débouchant latéralement vers l'extérieur, le dispositif de chauffage qui chauffe la face intérieure du tambour de cuisson sans moyeu étant disposé dans l'enveloppe autour de la chambre débouchant latéralement vers l'extérieur.

5. Dispositif suivant la revendication 4, **caractérisé en ce que** le dispositif (10b) de dépôt de pâte et le dispositif (11b) de transfert de bandes de la zone de cuisson intérieure respective sont disposés dans la chambre (20) débouchant latéralement vers l'extérieur.

6. Installation de production continue d'objets individuels à partir de bandes sans fin comprenant un dispositif de cuisson suivant l'une des revendications 1 à 5, **caractérisée par** au moins un dispositif (2a, 2b) de traitement de bandes, qui est disposé en aval de la zone respective de cuisson et qui est destiné à la bande formée dans la zone de cuisson concernée.

7. Installation suivant la revendication 6, **caractérisée en ce qu'**au moins une partie du dispositif (2b) de traitement de bandes, montée en aval d'une zone intérieure de cuisson, est disposée dans la chambre (20) de l'enveloppe (3) qui débouche latéralement vers l'extérieur.
